(19)

Europäisches Patentamt
European Patent Office
Office européen des brevets

(11) **EP 1 518 165 B1**

(12) **EUROPÄISCHE PATENTSCHRIFT**

(45) Veröffentlichungstag und Bekanntmachung des Hinweises auf die Patenterteilung:
**25.02.2009 Patentblatt 2009/09**

(21) Anmeldenummer: **02769146.8**

(22) Anmeldetag: **10.05.2002**

(51) Int Cl.:
**G06F 7/72** [(2006.01)]

(86) Internationale Anmeldenummer:
**PCT/EP2002/005170**

(87) Internationale Veröffentlichungsnummer:
**WO 2002/091332 (14.11.2002 Gazette 2002/46)**

(54) **BERECHNUNG EINES VIELFACHEN EINES GRUPPENELEMENTS FÜR KRYPTOGRAPHISCHE ZWECKE**

COMPUTATION OF A MULTIPLE OF A GROUP ELEMENT FOR CRYPTOGRAPHIC PURPOSES

CALCUL D'UN MULTIPLE D'UN ELEMENT DE GROUPE A DES FINS CRYPTOGRAPHIQUES

(84) Benannte Vertragsstaaten:
**AT BE CH CY DE DK ES FI FR GB GR IE IT LI LU MC NL PT SE TR**

(30) Priorität: **10.05.2001 DE 10122504**

(43) Veröffentlichungstag der Anmeldung:
**30.03.2005 Patentblatt 2005/13**

(73) Patentinhaber: **Giesecke & Devrient GmbH**
**81677 München (DE)**

(72) Erfinder: **SEYSEN, Martin**
**80809 München (DE)**

(74) Vertreter: **Dendorfer, Claus et al**
**Dendorfer & Herrmann**
**Patentanwälte Partnerschaft**
**Bayerstrasse 3**
**80335 München (DE)**

(56) Entgegenhaltungen:
**EP-A- 0 892 520      WO-A-00/05837**
**US-A- 5 999 627**

- **PHILLIPS B J ET AL: "Signed sliding window algorithms for modulo multiplication" ELECTRONICS LETTERS, IEE STEVENAGE, GB, Bd. 36, Nr. 23, 9. November 2000 (2000-11-09), Seiten 1925-1927, XP001052227 ISSN: 0013-5194**
- **KENJI KOYAMA ET AL: "A SIGNED BINARY WINDOW METHOD FOR FAST COMPUTING OVER ELLIPTIC CURVES" IEICE TRANSACTIONS ON FUNDAMENTALS OF ELECTRONICS, COMMUNICATIONS AND COMPUTER SCIENCES, INSTITUTE OF ELECTRONICS INFORMATION AND COMM. ENG. TOKYO, JP, Bd. E76 - A, Nr. 1, 1993, Seiten 55-61, XP000358858 ISSN: 0916-8508**

**Beschreibung**

Die Erfindung betrifft das Gebiet der Kryptographie und insbesondere automatische Berechnungsverfahren und -vorrichtungen für kryptographische Zwecke.

Kryptographische Verfahren in Gestalt von Verschlüsselungs- und Signaturverfahren erfreuen sich insbesondere durch die steigende Bedeutung des elektronischen Geschäftsverkehres einer stetig wachsenden Verbreitung. Sie werden in der Regel mittels elektronischer Vorrichtungen implementiert, die beispielsweise einen programmierbaren universellen Mikrokontroller oder auch eine spezialisierte elektronische Schaltung etwa in Gestalt eines ASIC beinhalten können.

Eine besonders interessante Form kryptographischer Vorrichtungen ist die Chipkarte, da sich in ihr bei zweckdienlicher technischer Ausgestaltung geheime Schlüsseldaten gegen unbefugten Zugriff schützen lassen. Ein ständiges Bemühen gilt dabei sowohl der Verbesserung der Ausführungsgeschwindigkeit der kryptographischen Verfahren als auch deren Sicherung gegen alle denkbare Arten von Angriffen. Die Erfindung eignet sich insbesondere für den Einsatz im Zusammenhang mit Chipkarten, ist aber in keiner Weise darauf beschränkt. Sie ist vielmehr im Zusammenhang mit allen Arten von kryptographischen Vorrichtungen implementierbar.

In den letzten Jahren sind speziell bei Implementierungen von kryptographischen Verfahren auf Chipkarten Angriffe publiziert worden, die aus der Messung der Stromaufnahme Informationen über geheime Daten und Schlüssel ableiten. Hierbei sind insbesondere die Angriffsverfahren *Simple Power Analysis* (SPA) und *Differential Power Analysis* (DPA) zu nennen. Weitere Angriffe beruhen auf Messungen von abgestrahlten elektrischen oder magnetischen Feldern. Für die Hersteller von Chipkarten ist es daher besonders wichtig, die grundlegenden kryptographischen Algorithmen so zu implementieren, daß sie gegen derartige Attacken möglichst resistent sind. Beispielsweise ist es im allgemeinen von Vorteil, wenn bei der Implementierung Sprungbefehle mit einem von den Daten abhängigen Sprungziel vermieden werden können.

Bei einer Reihe bekannter kryptographischer Verfahren ist es erforderlich, eine Multiplikation eines festen Elementes g einer (additiv geschriebenen) abelschen Gruppe G von ungerader Ordnung *e* mit einer variablen ganzen Zahl *k* gemäß der Gleichung

$$h = k \cdot g \quad \text{für} \quad g \in G \tag{1}$$

durchzuführen.

Alternativ dazu kann die Gruppe G auch multiplikativ geschrieben werden. In diesem Fall tritt an die Stelle der Multiplikation die Berechnung einer Potenz mit einer festen Basis g und einem variablen Exponenten k gemäß der Gleichung

$$h = g^k \quad \text{für} \quad g \in G. \tag{2}$$

Beispiele für Verfahren, bei denen die Gruppe G in der Literatur oft multiplikativ geschrieben wird, sind das Signaturverfahren von ElGamal (siehe Alfred J. Menezes, Paul C. van Oorschot und Scott A. Vanstone, "Handbook of Applied Cryptography", Boca Raton: CRC Press, 1997, Seite 454) und das Signaturverfahren nach dem DSA-Algorithmus von NIST (a.a.O., Seite 452). Im ersten Fall ist G die multiplikative Gruppe der Einheiten der ganzen Zahlen modulo einer Primzahl p, und im zweiten Fall ist G eine Untergruppe davon. Sowohl die Signaturgenerierung als auch die Verifikation einer Signatur erfordern eine bzw. zwei Operationen gemäß Gleichung (2).

Im vorliegenden Dokument wird aus Gründen der Vereinfachung und Einheitlichkeit stets die additive Gruppenschreibweise verwendet. Da es sich bei der additiven und der multiplikativen Schreibweise nur um unterschiedliche Notationen für den gleichen Sachverhalt handelt, sind die vorliegend beschriebenen Techniken natürlich auch zur Verwendung bei kryptographischen Verfahren vorgesehen, die in der Literatur in einer multiplikativen Gruppenschreibweise beschrieben sind, wie beispielsweise den im vorherigen Absatz erwähnten Verfahren. Unter dem im vorliegenden Dokument verwendeten Ausdruck des "*k*-fachen Vielfachens des Elements g der Gruppe G" ist also für *k* =1 das Element *g* zu verstehen, und für *k* > 1 die (*k*-1)-fache Anwendung der Gruppenoperation auf *k* Elemente *g*.

Es ist bekannt, die oben genannten Signaturverfahren von ElGamal und nach dem DSA-Algorithmus auf elliptische Kurven zu übertragen. So erhält man bei der Übertragung des DSA-Algorithmus auf elliptische Kurven die Verfahren ECSP_DSA zur Signaturgenerierung (siehe IEEE P 1363 Standard, Draft Version 10, 1999, Kapitel 7.2.7, Elliptic Curve Signature Primitive für DSA) und ECVP_DSA zur Verifizierung einer Signatur (siehe IEEE P 1363 Standard, Draft Version 10, 1999, Kapitel 7.2.8, Elliptic Curve Verification Primitive für DSA). Hierbei ist die Gruppe G eine elliptische Kurve über einem endlichen Körper, die hier, wie in der Literatur üblich, additiv geschrieben wird. Die zugrundeliegende Operation bei der Signaturgenerierung und -verifikation ist dann die Vervielfachung eines festen Punktes g auf der elliptischen Kurve G gemäß Gleichung (1). Falls die Gruppenordnung der elliptischen Kurve keine Primzahl ist, wird statt dessen in einer Untergruppe der elliptischen Kurve von Primzahlordnung gerechnet.

Bei allen genannten Verfahren ist für die Sicherheit des Verfahrens beim Signieren oder Entschlüsseln der Exponent bzw. Multiplikator geheimzuhalten.

Aus dem Buch "The Art of Computer Programming" von D. E. Knuth, Vol. 3, Seminumerical Algorithms, Addison Wesley, ist ein Verfahren für die Berechnung des $k$-fachen Vielfachens eines Elements g einer Gruppe G bekannt, das als *Double-and-Add*-Verfahren bezeichnet wird. Es sei $(a_{n-1},..., a_0)_2$ die übliche Binärform des Multiplikators $k$. Dies heißt, daß $k = \sum_{j=0}^{n-1} a_j \cdot 2^j$ mit $a_j \in \{0,1\}$ für $0 \le j < n-1$ und $a_{n-1}=1$ gelten. Das $k$-fache Vielfache $k \cdot g$ des Gruppenelements g wie dann wie folgt berechnet:

$$g_{n-1} = g$$

$$g_j = 2 \cdot g_{j+1} + a_j \cdot g \quad \text{für} \quad j = n-2, ...,0 . \tag{3}$$

Offensichtlich gilt $g_j = (a_{n-1},...,a_j)_2 \cdot g$ und somit $g_0 = k \cdot g$.

Ein Rechenschritt gemäß dem obigen *Double-and-Add*-Verfahren kostet jeweils eine Verdoppelung und außerdem eine zusätzliche Addition im Fall $a_j = 1$. Mit anderen Worten hängt die Notwendigkeit der zusätzlichen Addition hier jeweils von den einzelnen Bits $a_j$ des geheimzuhaltenden Multiplikators $k$ ab. Es ist jedoch eine Eigenschaft der oben erwähnten kryptographischen Verfahren, deren Gruppe eine elliptische Kurve über einem endlichen Körper ist, sowie anderer Verfahren, daß sich die Addition von zwei verschiedenen Punkten (= Gruppenelementen) hinsichtlich der auszuführenden Rechenschritte stark von der Verdoppelung eines Punktes (= Gruppenelements) unterscheidet. Infolgedessen kann man mit Techniken der *Power Analysis* (SPA/ DPA) auf Chipkarten in der Regel unterscheiden, ob gerade eine Verdoppelung eines Gruppenelements oder eine Addition zweier unterschiedlicher Gruppenelemente ausgeführt wird. Dies würde bei dem obigen *Double-and-Add*-Verfahren Rückschlüsse auf die Bits $a_j$ des geheimzuhaltenden Multiplikators $k$ zulassen.

Es besteht daher ein Bedürfnis nach einem Multiplikationsverfahren, das einen besseren Schutz gegen *Power-Analysis*-Angriffe bietet, indem es Implementierungen mit einem im Hinblick auf die auszuführenden Operationen gleichmäßigeren Berechnungsablauf zuläßt.

In dem US-Patent 5,999,627 ist ein Verfahren zur Berechnung des Wertes eines exponentierten Gruppenelements gezeigt. Da im US-Patent 5,999,627 eine multiplikative Gruppenschreibweise verwendet wird, entspricht die dort beschriebene Exponentenbildung in der Terminologie des vorliegenden Dokuments der Multiplikation. Das Verfahren beruht darauf, daß verschiedene Vielfache des Gruppenelements vorab berechnet und abgespeichert werden. Hierbei ist eine Abwägung zwischen der Rechenzeit (=Anzahl der Gruppenoperationen) und dem Speicherbedarf (=Anzahl der vorab berechneten und abgespeicherten Hilfswerte) erforderlich. Ähnliche Verfahren sind in Kapitel 14.6.3 das bereits erwähnten Buches "Handbook of Applied Cryptography" von Alfred J. Menezes, Paul C. van Oorschot und Scott A. Vanstone, Boca Raton: CRC Press, 1997 dargestellt.

Es besteht jedoch ein Bedürfnis, die im vorhergehenden Absatz beschriebenen Verfahren weiter zu verbessern, insbesondere im Hinblick auf zumindest eines der Kriterien Ressourcenbedarf (Rechenzeit, Speicherplatz, ...) und Schutz gegen Ausspähung (durch *Power Analysis* oder andere Angriffsverfahren).

WO 00/05837 A1 offenbart ein Verfahren, bei dem eine Gruppenoperation eine vorbestimmte Anzahl von Malen auf ein Gruppenelement angewendet wird. Das Dokument zeigt eine Darstellung der Werte 629 und 628 in balancierter Binärform mit Koeffizienten -1 und +1.

Die Erfindung hat demgemäß die Aufgabe, die oben genannten Bedürfnisse ganz oder zum Teil zu erfüllen. Insbesondere soll sich die Erfindung zur Berechnung von Vielfachen eines Gruppenelements eignen, wobei der Berechnungsablauf gut gegen Ausspähung geschützt ist. In bevorzugten Ausführungsformen der Erfindung soll der Ressourcenbedarf (insbesondere im Hinblick auf die erforderliche Rechenzeit) möglichst gering sein.

Erfindungsgemäß wird diese Aufgabe zumindest teilweise durch Verfahren mit den Merkmalen der Ansprüche 1, 5 und 14 sowie durch eine Vorrichtung mit den Merkmalen des Anspruchs 16 gelöst. Die abhängigen Ansprüche betreffen bevorzugte Ausgestaltungen der Erfindung.

Eine der Erfindung zugrundeliegende Idee ist es, den Multiplikator *k* auf besondere Weise darzustellen, nämlich in einer der hier als "balancierte Binärform" bzw. "balancierte Form" bezeichneten Strukturen. Ebenso wie die übliche Binärform ist die balancierte Binärform ein Stellenwertsystem mit der Basis 2; allerdings haben im Gegensatz zur üblichen Binärform die Koeffizienten bei der balancierten Binärform nicht die Werte 0 und 1, sondern im wesentlichen die Werte 1 und -1. Die balancierte Form ist eine Verallgemeinerung der balancierten Binärform, bei der die Koeffizienten als mögliche Werte alle ungeraden ganzen Zahlen in einem Intervall $[ -2^u, 2^u ]$ für einen vorgegebenen Parameter u aufweisen. Mit anderen Worten ist die Darstellung eines Wertes *k* in balancierter Form aus der balanciert binären Darstellung des Wertes *k* ableitbar, indem je u Stellen der balancierten Binärform zu je einer Stelle der balancierten Form zusammengefaßt werden. Für u =1 sind die balancierte Binärform und die balancierte Form identisch.

Wenn beispielsweise bei dem oben als Vergleichsbeispiel beschriebenen *Double-and-Add*-Verfahren gemäß Formel (3) der Multiplikator *k* in balanciert binärer Darstellung gegeben ist, erfordert jeder Rechenschritt eine Verdoppelung und eine anschließende Addition, wobei je nach dem Wert von $a_j$ entweder der Punkt g oder der Punkt -g zu addieren ist. Damit wird die Ausspähungssicherheit erheblich gesteigert, denn die (durch Messung der Stromaufnahme meistens gegebene) Möglichkeit zur Unterscheidung zwischen einer Verdoppelung eines Elements und einer Addition von zwei verschiedenen Elementen gibt im Verlauf der Berechnung von *k*·g noch keine Information über den Multiplikator *k* frei.

Die Aufzählungsreihenfolge der Verfahrensschritte in den Ansprüchen soll keine Einschränkung des Schutzbereichs darstellen. Vielmehr können in konkreten Ausgestaltungen der Erfindung die Verfahrensschritte auch in anderer Reihenfolge oder parallel oder ineinander verzahnt (*interleaved*) ausgeführt werden.

Erfindungsgemäß sind die Koeffizienten der balancierten Binärform im wesentlichen die Werte 1 und -1 bzw. die Koeffizienten der balancierten Form im wesentlichen die ungeraden ganzen Zahlen im Intervall $[-2^u, 2^u]$. Das schließt nicht aus, daß einzelne Koeffizienten andere Werte aufweisen, beispielsweise den Wert 0. Vorzugsweise ist dies jedoch nur an wenigen Stellen oder Bitpositionen (z.B. an höchstens 10 % der Stellen oder Bitpositionen oder an höchstens einer Stelle oder Bitposition oder höchstens an der geringstwertigen Stelle oder Bitposition) der Fall. Dies kann wünschenswert sein, um das Produkt *k*·g auch für gerade Multiplikatoren k berechnen zu können. Die mögliche Einbuße an Ausspähungssicherheit ist gering, solange im Vergleich zur gesamten Bitlänge nur wenige Bitpositionen betroffen sind. In bevorzugten Ausführungsformen weist die balancierte Binärform jedoch ausschließlich Koeffizienten mit den Werten 1 und -1 auf. Dies hat unter anderem den Vorteil, daß bei der Berechnung nur zwei Fälle berücksichtigt werden müssen. Entsprechend weist die balancierte Form vorzugsweise ausschließlich die oben genannten Koeffizienten auf.

In bevorzugten Ausführungsformen dient als Multiplikationsverfahren das bereits erwähnte *Double-and-Add*-Verfahren, wobei vorab Hilfswerte berechnet werden, die unterschiedliche Vielfache des Elements g darstellen. Diese Hilfswerte werden gespeichert, um später je nach Bedarf im Multiplikationsverfahren verwendet werden zu können. In unterschiedlichen Ausführungsformen kann die Berechnung der Hilfswerte entweder in engem zeitlichen Zusammenhang mit der eigentlichen Multiplikation oder davon getrennt (z.B. bei der Herstellung oder Initialisierung oder Programmierung der Chipkarte) erfolgen.

Bevorzugt werden Gruppen verwendet, bei denen die Negation eines Gruppenelements relativ wenig Aufwand erfordert. Dies ist beispielsweise bei elliptischen Kurven und in der Regel auch bei hyperelliptischen Kurven der Fall. Die Erfindung ist jedoch nicht auf diese Gruppen beschränkt. Wenn das Inverse eines Gruppenelements leicht zu berechnen ist, dann ist bei der Ausführung des *Double-and-Add*-Verfahrens die Addition nur schwer von der Subtraktion (= Addition des Inversen) zu unterscheiden. Ferner ist eine Verringerung des Speicherplatzbedarfs dadurch möglich, daß solche Hilfswerte, die invers zueinander sind, nur höchstens einmal berechnet und abgespeichert werden.

Vorzugsweise ist die Gruppe G eine zyklische Gruppe mit einer ungeraden Gruppenordnung *e*; insbesondere kann die Ordnung *e* der Gruppe G eine Primzahl sein. Bei vielen kryptographisch wichtigen Verfahren, die wesentlich auf einer der Operationen (1) oder (2) basieren, sind diese Merkmale gegeben. Unter einer zyklischen Gruppe G wird hier verstanden, daß die bei dem verwendeten kryptographischen Verfahren für die Operation (1) bzw. (2) relevanten Gruppenelemente die Elemente *k*·g mit g $\in$ G und *k* =1, ..., *e*-1 sind. Da sich in diesem Fall das Ergebnis *k*·g nicht ändert, wenn man zu *k* vor der Multiplikation ein (möglicherweise negatives) Vielfaches der Gruppenordnung *e* addiert, ist in bevorzugten Ausführungsformen vorgesehen, den Wert k durch Addition oder Subtraktion der Gruppenordnung *e* in den Wertebereich -*e* $\leq$ *k* $\leq$ *e* zu überführen.

Bevorzugt wird mindestens ein Satz von Hilfswerten *k*·g berechnet, bei denen die balancierte Binärform des Multiplikators *k* an vorgegebenen Bitpositionen alle möglichen Belegungen der Werte 1 und -1 aufweist (mit der möglichen Einschränkung, daß nur je einer der Hilfswerte *k*·g und -(*k*·g) berechnet zu werden braucht). Ein Verfahren, bei dem derartige Hilfswerte berechnet werden, ist ebenfalls Gegenstand der Erfindung.

In bevorzugten Ausgestaltungen der Erfindung, die auf der Verwendung einer allgemeinen balancierten Form beruhen, werden ebenfalls Hilfswerte berechnet und vorab in einer Tabelle oder einem sonstigen Speicherbereich abgelegt. Vorzugsweise sind diese Hilfswerte die Produkte aller zulässigen Koeffizientenwerte mit dem Element g. Auch hier braucht in vorteilhaften Ausführungsformen nur jeweils eines der Vielfachen *b*·g und (-*b*)·g als Hilfswert gespeichert zu werden. Die Multiplikation erfolgt dann vorzugsweise mit einer Variante des *Double-and-Add*-Verfahrens, bei der in jedem Schritt eine u-fache Verdopplung (= Multiplikation mit $2^u$) stattfindet, und bei der jeweils nicht das Element g, sondern eines der vorab gespeicherten Vielfachen addiert oder subtrahiert wird.

Die erfindungsgemäße Vorrichtung kann eine Chipkarte oder ein anderes mobiles Medium oder ein Computer sein. Insbesondere kann die Vorrichtung einen Prozessor, Programm- und Datenspeicher sowie Kommunikationsmittel aufweisen. Bevorzugt ist die Vorrichtung mit Merkmalen weitergebildet, die den oben erwähnten und/ oder den in den Verfahrensansprüchen beschriebenen Merkmalen entsprechen.

Mehrere Ausführungsbeispiele der Erfindung werden nun genauer beschrieben.

Bei den in der Kryptographie üblicherweise verwendeten Gruppen ist die zugrundeliegende Gruppenoperation eine Berechnung vom Typ

$$g_3 = g_1 + g_2 \quad \text{für} \quad g_1, g_2 \in G ,$$

wobei aber die Werte $g_i$, i=1, 2, 3 im allgemeinen keine Zahlen sind, sondern z.B. im Fall der elliptischen Kurven sind dies Punkte $g_i = (x_i, y_i)$ auf der Kurve. Die Implementierung der Gruppenoperation selbst ist nicht Gegenstand der Erfindung. Im folgenden wird als einfaches Beispiel die Gruppe G einer elliptischen Kurve $y^2 = x^3 + ax + b$ über einem endlichen Körper GF(p) mit p Elementen, p>3, p prim herangezogen. Die Gruppenelemente werden im vorliegenden Dokument, wie bei elliptischen Kurven und anderen Gruppen üblich, auch als Punkte bezeichnet.

Bei der gerade genannten Gruppe G erfolgt die Addition von zwei Punkten nach der Formel $(x_3, y_3) = (x_1, y_1) + (x_2, y_2)$ mit:

$$x_3 = \lambda^2 - x_1 - x_2 \quad \text{und} \quad y_3 = -y_1 + \lambda \cdot (x_1 - x_3) \quad (\text{mod } p) \quad (4)$$

Im Falle $(x_1, y_1) \neq (x_2, y_2)$ gilt:

$$\lambda = (y_1 - y_2) / (x_1 - x_2) \quad (\text{mod } p) \quad (5)$$

Im Fall $(x_1, y_1) = (x_2, y_2)$ dagegen gilt:

$$\lambda = (3x_1^2 + a_2) / (2y_1) \quad (\text{mod } p) \quad (6)$$

Für die Negation gilt die Formel:

$$-(x_1, y_1) = (x_1, -y_1) \quad (\text{mod } p) \quad (7)$$

Aus diesen Formeln (4) - (7) läßt sich erkennen, daß für die vorliegend beispielhaft verwendete Gruppe G die Negation eines Punktes auf einer elliptischen Kurve im Vergleich zur Addition von zwei Punkten nur sehr wenig Aufwand erfordert. Außerdem unterscheidet sich ein Unterprogramm für die Addition von zwei verschiedenen Punkten stark von einem Unterprogramm für die Verdoppelung eines Punktes. Infolgedessen kann man durch Techniken der *Power Analysis* (SPA/DPA) auf Chipkarten in der Regel unterscheiden, welches der beiden Unterprogramme gerade ausgeführt wird, was zu der eingangs beschriebenen Angriffsmöglichkeit führen kann.

In den hier beschriebenen Ausführungsbeispielen der Erfindung wird der Multiplikator *k* des zu berechnenden Vielfachen *k*·g in einer balanciert binären Form dargestellt. Als vorbereitender Schritt hierzu wird der Multiplikator *k* in einen gleichwertigen Multiplikator k' überführt (es gilt also *k*·g = *k*'·g), wobei k' eine ungerade ganze Zahl im Bereich -*e*, ..., -1,1, ..., *e* ist. Dieser Schritt erfolgt, falls erforderlich, durch Subtraktion der (ungeraden) Gruppenordnung *e* vom ursprünglichen Multiplikator *k*. Im folgenden wird der Einfachheit halber auch der in den Bereich -*e*, ..., -1,1, ..., *e* überführte Multiplikator wieder mit $k$ bezeichnet.

Die balancierte Binärform des ungeraden Multiplikators $k$ wird durch $n$ Koeffizienten $(a_{n-1},..., a_0)$ einer Stellenwertdarstellung ausgedrückt; der Wert $n$ wird dabei als Bitlänge bezeichnet. Die Koeffizienten $(a_{n-1}, ..., a_0)$ sind eine balancierte Binärform der ungeraden Zahl $k$ mit der Bitlänge $n$, wenn gilt:

$$k = \sum_{j=0}^{n-1} a_j \cdot 2^j \quad \text{mit} \quad a_j \in \{1, -1\}. \tag{8}$$

Jede ungerade Zahl $k$ im Bereich $[-2^n, ..., 2^n]$ hat genau eine balanciert binäre Darstellung der Länge $n$. Beispielsweise ergeben sich für $n = 3$ die folgenden Werte:

| -7 | -5 | -3 | -1 | 1 | 3 | 5 | 7 |
|---|---|---|---|---|---|---|---|
| (-1,-1,-1) | (-1,-1,1) | (-1,1,-1) | (-1,1,1) | (1,-1,-1) | (1,-1,1) | (1,1,-1) | (1,1,1) |

In einer algorithmischen Schreibweise kann ein Verfahren zur Berechnung der balancierten Binärform durch die folgende Schleife ausgedrückt werden:

```
for i := n-1 downto 0 do
    if k > 0 then aᵢ := 1; k := k - 2ⁱ else aᵢ := -1; k := k + 2ⁱ  endif  (8')
```

Liegt die balancierte Binärform des Multiplikators $k$ vor, so kann dies wird hier zur Erläuterung angewerkt das Produkt $k \cdot g$ nach dem *Double-and-Add* Verfahren gemäß Formel (3) berechnet werden. Eine mehr algorithmische Schreibweise dieses *Double-and-Add-* Verfahrens lautet wie folgt, wobei nach dem Schleifenende das Ergebnis $k \cdot g$ in der Variablen vorliegt:

```
r := g ;

for j := n-2 downto 0 do
    if aⱼ = 1 then r := 2·r + g else r := 2·r + (-g) endif          (3')
```

Wie eingangs bereits erwähnt, wird bei diesem Verfahren in jedem Schritt eine Verdopplung und eine Addition ausgeführt. Es ergibt sich somit ein sehr gleichmäßiger Berechnungsablauf, dessen Stromaufnahmeprofil keine oder nur geringe Rückschlüsse auf den Wert des Multiplikators $k$ zuläßt. Die im Fall $a_j = -1$ erforderliche Negation bedingt gemäß (7) nur geringen Aufwand, der sich durch geeignete Operationen auch im anderen Zweig des if-Konstrukts duplizieren läßt.

In einer Variante wird das gerade beschriebene Verfahren dadurch abgewandelt, daß der Wert $k$ statt in der balancierten Binärform in einer allgemeinen balancierten Form mit einem Parameter $u \geq 1$ dargestellt wird. Die allgemeine balancierte Form ist ein Stellenwertsystem, bei dem die Gewichte der einzelnen Stellen $2^{u \cdot j}$ für $j = 0,1, ...$ betragen und bei dem die Koeffizienten $a_j$ ungerade ganze Zahlen im Bereich $[-2^u, ..., 2^u]$ sind. Die n Koeffizienten $(a_{n-1}, ..., a_0)$ sind eine balancierte Form der ungeraden Zahl $k$, wenn gilt:

$$k = \sum_{j=0}^{n-1} a_j \cdot 2^{u \cdot j} \quad \text{mit} \quad a_j \in \{-(2^u-1), -(2^u-3), ..., -1, 1, ..., 2^u-3, 2^u-1\} \tag{W}$$

Zur Umwandlung einer balancierten Binärform mit Bitlänge n* und Koeffizienten ($a^*_{n^*-1}$, ..., $\alpha^*_0$) in eine balancierte Form wird bei gegebenem Parameter u zunächst die Koeffizientenanzahl n der balancierten Form bestimmt. Hierbei gilt n* = n·u. Falls n* kein Vielfaches von u ist, wird vorab die balancierte Binärform um zusätzliche Stellen erweitert, bis eine durch u glatt teilbare Bitlänge n* erreicht ist. Dann werden jeweils u benachbarte Binärstellen der balancierten Binärform zusammengefaßt. Die n Parameter ($a_{n-1}$, ..., $a_0$) der balancierten Form ergeben sich vermöge:

$$a_j = \sum_{v=0}^{u-1} a^*_{u\cdot j+v} \cdot 2^v \qquad\qquad (X)$$

Aufgrund Gleichung (X) können die Koeffizienten $a_j$ höchstens $2^u$ Werte annehmen, nämlich die ungeraden ganzen Zahlen im Bereich [$-2^u$,..., $2^u$].

Bei dem hier beschriebenen Ausführungsbeispiel werden alle Vielfachen $b\cdot g$ für alle ungeraden ganzen Zahlen $b$ mit $|b| < 2^u$ (also für alle zulässigen Werte der Koeffizienten $a_j$) vorab berechnet und als Hilfswerte gespeichert. Wenn die Inversion nur geringen Aufwand erfordert, kann in Ausführungsalternativen Speicherplatz eingespart werden, indem nur jeweils einer der Werte $b\cdot g$ und $-b\cdot g$ vorab berechnet wird. Der jeweils andere Wert kann dann bei Bedarf leicht aus dem gespeicherten Wert abgeleitet werden.

Um nach dieser Vorab-Berechnung ein Produkt $k\cdot g$ mit einem in balancierter Form vorliegenden Multiplikator $k$ zu bestimmen, wird die folgende Beziehung verwendet, die sich durch Einmultiplizieren von g in die Gleichung (W) ergibt:

$$k\cdot g = \sum_{j=0}^{n-1} (a_j\cdot g) \cdot 2^{u\cdot j} \qquad\qquad (Y)$$

Jeder mögliche Wert $a_j\cdot g$ in Formel (Y) liegt als bereits vorab berechneter und gespeicherter Hilfswert vor, so daß bei der Auswertung von Formel (Y) leicht auf den gespeicherten Wert (bzw. auf dessen Inverses) zugegriffen werden kann.

Eine mehr algorithmische Schreibweise des Berechnungsablaufs im vorliegenden Ausführungsbeispiel, die sich an dem Double-and-Add-Verfahren orientiert, lautet wie folgt. Das Ergebnis k·g ist nach dem Schleifenende in der Variablen r enthalten:

```
r := a_{n-1}·g ;                                    (Z1)
for j := n-2 downto 0 do                            (Z2)
      for v = 1 to u do r := 2·r endfor ;           (Z3)
      r := r + a_j·g                                 (Z4)
endfor                                              (Z5)
```

Die in den Zeilen (Z1) und (Z4) benötigten Werte $a_{n-1}\cdot g$ und $a_j\cdot g$ sind, wie bereits erwähnt, bereits vorab als Hilfswerte berechnet worden und brauchen lediglich aus dem Speicher ausgelesen (und gegebenenfalls invertiert) zu werden. In Zeile (Z3) erfolgt eine Multiplikation mit $2^u$.

Im weiteren Text werden unter Hinweis auf die Formeln (9) bis (28) Ausgestaltungen beschrieben werden, die ebenfalls die Technik der Vorab-Berechnung und Speicherung von Hilfswerten einsetzen. Das vorliegende Verfahren ist in der Regel langsamer als die noch zu beschreibenden Ausgestaltungen, wenn der Aufwand für die Vorab-Berechnung vernachlässigt wird. Bei manchen kryptographischen Anwendungen kann jedoch die Vorab-Berechnung erst zur Laufzeit durchgeführt werden, weil der Generatorpunkt g nicht im voraus bekannt ist. In solchen Fällen ist die hier dargestellte Variante oft günstiger (insbesondere schneller) als die Ausgestaltungen gemäß den Formeln (9) bis (28).

Es wird nun wieder auf das Ausführungsbeispiel nach Formel (3) bzw. Algorithmus (3') Bezug genommen. Dort steigt im Vergleich zum *Double-and Add*-Verfahren mit üblicher Binärdarstellung die durchschnittliche Anzahl der erforderlichen Additionen von $n/2$ auf $n$. In weiteren Ausführungsbeispielen ist daher vorgesehen, zur Verringerung der erforderlichen Rechenzeit geeignete Hilfswerte vorab zu berechnen und zu speichern. Insbesondere im Zusammenhang mit elliptischen Kurven, aber auch bei einigen anders aufgebauten Gruppen G, ist gemäß (7) die Berechnung von -g bei einem gegebenem Element g sehr leicht möglich. Falls eine Menge K von vorab berechneten und gespeicherten Vielfachen $k_i \cdot$g abgeschlossen gegen die Negation ist, wird daher in den im folgenden beschriebenen Ausführungsbeispielen nur je eines der beiden Vielfachen $k \cdot$g und $-k \cdot$g abgespeichert. Das nicht gespeicherte Vielfache kann dann bei Bedarf leicht nach (7) berechnet werden.

Sei $n$ mit $2^n > e$ so gewählt, daß die Gruppenordnung $e$ als $n$-Bit-Zahl darstellbar ist, und sei N die Menge N = {0, 1, ..., $n$-1}. Ferner sei $\underline{Q}$= {$Q_1$, ..., $Q_t$} eine Menge von nichtleeren und paarweise disjunkten Teilmengen von N, wobei $0 \in Q_i$ für eine Menge $Q_i \in \underline{Q}$ gilt. Sei $Q' = \cup_{i=1}^{t} Q_i$ die Vereinigungsmenge dieser Mengen $Q_i$. Wir definieren eine Funktion $f : Q' \to$ N durch:

$$f(x) = \min \{ y \in N \mid x+y \in (Q'\backslash Q_i) \cup \{n\}, x_i \in Q_i \} . \tag{9}$$

Für die Menge $\underline{Q}$ fordern wir außerdem, daß $f(x) = f(y)$ gilt, falls $x$ und $y$ in der gleichen Menge $Q_i \in \underline{Q}$ liegen. Aufgrund dieser Forderung ist die Funktion $f$ auch als Funktion von $\underline{Q}$ auf N gut definiert durch:

$$f(Q) = f(x) \text{ für ein beliebiges } x \in Q , Q \in \underline{Q} . \tag{10}$$

Die Funktion $f$ gibt den "Abstand" der Mengen $Q_i \in \underline{Q}$ voneinander an. Der Maximalwert der Funktion $f$ wird mit $d$ bezeichnet, d.h.:

$$d = \max \{ f(x) \mid x \in Q' \} . $$

Zu einer (echten oder unechten) Teilmenge $Q \subset$ N und einer ganzen Zahl $i$ sei $Q+i$ die Menge:

$$Q+i = \{ x+i \mid x \in Q \} . \tag{11}$$

Die Menge $\underline{P}$ enthält alle $Q_i \in \underline{Q}$ enthält sowie zusätzlich "verschobene" Fassungen dieser Mengen, die eventuell vorhandene "freie Bereiche" ausfüllen. Die Menge $\underline{P}$ ist definiert durch:

$$\underline{P} = \{ Q_i +j \mid 1 \leq i \leq t, 0 \leq j < f(Q_i) \} . \tag{12}$$

Die Menge $\underline{P}$ ist eine Partition von N, d.h., jedes $\times \in$ N liegt in genau einer Menge aus $\underline{P}$.

Für zwei Mengen T und Q mit T $\subset$ Q $\subset$ N definieren wir $k$[T,Q] durch:

$$k[T,Q] = (\textstyle\sum_{i \in T} 2^i) - (\sum_{i \in Q\backslash T} 2^i) . \tag{13}$$

Ferner setzen wir g[T,Q] = $k$[T,Q]$\cdot$g. Somit ist g[T,Q] das $k$[T,Q]-fache Vielfache von g, also g[T,Q] = $k$[TQ]$\cdot$g, wobei $k$[TQ] binär derart darstellbar ist, daß an der Bitpositionen $i$ eine Ziffer 1 steht, falls $i \in$ T gilt, und eine Ziffer -1,

falls $i \in Q\backslash T$ gilt. Die übrigen Bitpositionen von $k[T,Q]$ sind mit Nullen besetzt.

Bei den im folgenden beschriebenen Ausführungsbeispielen der Erfindung werden für alle T, Q mit $T \subset Q \in \underline{Q}$ die Vielfachen $g[T,Q] = k[T,Q]\cdot g$ im voraus berechnet und abgespeichert. Offensichtlich gilt $g[Q\backslash T,Q] = -g[T,Q]$, so daß bei dem hier beschriebenen Beispiel elliptischer Kurven nur einer dieser beiden Punkte vorab berechnet und abgespeichert werden muß. Das Negative dazu kann bei Bedarf leicht nach Formel (7) berechnet werden. Hierdurch ergibt sich eine Halbierung des Speicherbedarfes.

Um ein beliebiges ungerades Vielfaches $k\cdot g$ mit $-2^n < k < 2^n$ berechnen zu können, wird $k$ balanciert binär dargestellt. Wir definieren $T_{k,n} = \{ j \mid j \in N, a_j = 1\}$, wobei $(a_{n-1}, ..., a_0)$ die balancierte Binärform der Länge $n$ der Zahl $k$ gemäß Gleichung (8) ist. Somit ist $T_{k,n}$ die Menge der Bitpositionen, an denen die ungerade Zahl $k$ in der balanciert binären Darstellung der Länge $n$ eine Ziffer 1 hat.

Das Vielfache $k\cdot g$ wird nun wie folgt berechnet:

$$k\cdot g = \sum_{j=0}^{d-1} \left( 2^j \cdot \sum_{Q \in \underline{Q}, f(Q) > j} g[Q \cap (T_{k,n}-j), Q] \right) \qquad (14)$$

Die Korrektheit von (14) ergibt sich aus

$$k = \sum_{Q \in \underline{P}} k[Q \cap T_{k,n}, Q] \qquad \qquad (\text{da } \underline{P} \text{ eine Partition von N ist})$$

$$= \sum_{j=0}^{d-1} \left( \sum_{Q \in \underline{Q}, f(Q) > j} k[Q+j \cap T_{k,n}, Q+j] \right)$$

$$= \sum_{j=0}^{d-1} \left( 2^j \cdot \sum_{Q \in \underline{Q}, f(Q) > j} k[Q \cap (T_{k,n}-j), Q] \right)$$

Zur Berechnung des Vielfachen $k\cdot g$ gemäß Formel (14) kann wiederum ein *Double-and-Add*-Verfahren dienen. Kritisch ist die äußere Additionsschleife jedoch in der Regel nicht, solange der Wert $d$ relativ klein ist.

Zu einer endlichen Menge M sei #M die Anzahl ihrer Elemente. Die Anzahl der Gruppenoperationen für die Berechnung von $k\cdot g$ nach Gleichung (14) ist im folgenden angegeben. Die getrennte Angabe der Anzahl der Verdoppelungen und Additionen ist deswegen sinnvoll, weil der Rechenaufwand für diese beiden Operationen im Fall von elliptischen Kurven in der Regel deutlich unterschiedlich ist:

$$d\text{-}1 \qquad \qquad \text{Verdoppelungen}$$

$$\#\underline{P} - 1 \qquad \text{Additionen von (in der Regel verschiedenen) Punkten} \qquad (15)$$

Der Speicheraufwand (unter Berücksichtigung der oben genannten Halbierung) beträgt:

$$\sum_{Q \in \underline{Q}} 2^{\#Q-1} \qquad \qquad (16)$$

Es ist anzumerken, daß zu einer gegebenen ungeraden Gruppenordnung $e$ die Zahl $n$ die Bedingung $2^n > e$

erfüllen muß. Aus Gleichung (9) und (10) können sich gewisse Einschränkungen für einen optimalen Wert von *n* ergeben. Infolgedessen ist bei vorgegebenem Rechenzeit- oder Speicheraufwand nicht notwendig der kleinstmögliche Wert von *n* optimal.

In bevorzugten Ausführungsbeispielen der Erfindung werden die Mengen $Q \in \underline{Q}$ wie folgt gewählt:

Sei $Z(k, i)$ die Menge der Vielfachen von *k* im Intervall 0, ..., *i·k*-1:

$$Z(k, i) = \{ k \cdot j \mid j = 0, ..., i\text{-}1 \} \tag{17}$$

Dann setzen wir:

$$n = h \cdot b \cdot v \qquad (n \text{ ist die Bitlänge})$$

$$\underline{Q}_{h \times v[b]} = \{ i \cdot b + Z(b \cdot v, h) \mid i = 0, ..., v\text{-}1 \} \tag{18}$$

Man kann sich die *v* einzelnen Mengen $Q \in \underline{Q}_{h \times v[b]}$ als Zeilen einer Matrix vorstellen, wobei die *h* Elemente jeder Menge Q innerhalb der Zeile in aufsteigender Reihe angeordnet werden. Eine solche Matrix hat demnach $v$ Zeilen und *h* Spalten, und der Wert des Matrixelements mit den Koordinaten *x, y* ($0 \le x \le h\text{-}1, 0 \le y \le v\text{-}1$) beträgt $b \cdot (y + v \cdot x)$. Die Matrix enthält alle Vielfachen von *b* im Bereich 0 bis $b \cdot ((v\text{-}1) + v \cdot (h\text{-}1))$.

Es gilt $f(Q) = b$ für alle $Q \in \underline{Q}_{h \times v[b]}$. Die in (12) definierte Partition besteht demnach aus den $b \cdot v$ Mengen $\{ i + Z(b \cdot v, h) \mid i = 0, ..., b \cdot v \text{-}1 \}$. Nach (15) beträgt die Anzahl der Gruppenoperationen für die Berechnung von $k \cdot g$ also:

$$b\text{-}1 \qquad \text{Verdoppelungen}$$

$$b \cdot v \text{ - } 1 \qquad \text{Additionen von (in der Regel verschiedenen) Punkten} \tag{19}$$

Der Speicheraufwand beträgt nach (16) und (18) dann:

$$v \cdot 2^{h\text{-}1} \tag{20}$$

In weiteren Ausführungsbeispielen der Erfindung werden sogenannte gemischte Konfigurationen eingesetzt, die an sich (jedoch nicht in Zusammenhang mit der balancierten Binärform) bereits aus dem US-Patent 5,999,627 bekannt sind. Diese gemischten Konfigurationen sind für manche Bitlängen *n* günstig. In der vorliegenden Notation bedeutet eine gemischte Konfiguration die Kombination mehrerer Parametertripel (*h, b, v*). Wie unten noch erläutert werden wird, ist in allen Fällen eine Kombination von höchstens drei derartigen Tripeln (*h, b, v*) optimal. Im folgenden wird zunächst die Kombination von zwei Konfigurationen wie folgt definiert:

$$n = h \cdot b \cdot v + h' \cdot b' \cdot v' \qquad (n \text{ ist die Bitlänge})$$

$$\underline{Q}_{h \times v[b] : h' \times v'[b']} = \underline{Q}_{h \times v[b]} \cup (\underline{Q}_{h' \times v'[b']} + h \cdot b \cdot v) \tag{21}$$

Dabei ist die Addition einer Zahl zu einer Menge $\underline{Q}$ von Mengen von Zahlen elementweise wie folgt definiert:

$$\underline{Q}+i = \{ Q+i \mid Q \in Q \}. \tag{22}$$

Die Funktion *f* ist auch für die Mengen einer gemischten Konfiguration gut definiert.

Nach (15) beträgt die Anzahl der Gruppenoperationen für die Berechnung von $k \cdot g$ bei einer gemischten Konfiguration:

$$\max(b,b') - 1 \quad \text{Verdoppelungen}$$

$$b \cdot v + b' \cdot v' - 1 \quad \text{Additionen von (in der Regel verschiedenen) Punkten} \tag{23}$$

Der Speicheraufwand für die gemischte Konfiguration beträgt nach (16):

$$v \cdot 2^{h-1} + v' \cdot 2^{h'-1} \tag{24}$$

Die Konfigurationen zu $\underline{Q}_{h \times v[b]}$ und $\underline{Q}_{h \times v[b] - h' \times v'[b']}$ bezeichnen wir im folgenden einfach mit h×v[b] beziehungsweise hxv[b] : h'×v'[b'].

Gemischte Konfigurationen

$$h_1 \times v_1 \, [b_1] \; : \; h_2 \times v_2 \, [b_2] \; : \; \ldots \; : \; h_k \times v_k \, [b_k]$$

mit beliebig vielen Komponenten werden analog definiert:

$$n = \sum_{j=1}^{k} h_j \cdot b_j \cdot v_j \qquad (n \text{ ist die Bitlänge}),$$

$$\underline{Q}_{h\_1 \times v\_1[b\_1] : \ldots : h\_k \times v\_k[b\_k]} = \bigcup_{j=1}^{k} \left( \underline{Q}_{h\_j \times v\_j [b\_j]} + \sum_{j=1}^{k-1} h_j \cdot b_j \cdot v_j \right). \tag{25}$$

Die Schreibweisen $x\_y$ und $x_y$ (also z.B. $h\_k$ und $h_k$) sind hierbei aufgrund von typographischen Beschränkungen eingeführte Synonyme.

Nach (15) beträgt die Anzahl der Gruppenoperationen für die Berechnung von $k \cdot g$ bei einer gemischten Konfiguration:

$$\max\{b_1, \ldots, b_k\} - 1 \quad \text{Verdoppelungen}$$

$$\left( \sum_{j=1}^{k} b_j \cdot h_j \right) - 1 \quad \text{Additionen von (i.d.R. verschiedenen) Punkten} \tag{26}$$

Der Speicheraufwand für die gemischte Konfiguration beträgt nach (16):

$$\sum_{j=1}^{k} v_j \cdot 2^{h\_j-1} \qquad\qquad (27)$$

In bevorzugten Ausführungsbeispielen werden Konfigurationen eingesetzt, die besonders gute Eigenschaften im Hinblick auf Rechenzeit und Speicherbedarf haben. Speziell bei elliptischen Kurven ist zu beachten, daß die Rechenzeit für eine Verdoppelung sich von der für eine Addition unterscheidet, und daß dieses Verhältnis stark von der Implementierung der Gruppenoperation abhängt.

Eine wichtige Erkenntnis ist jedoch, daß bei gegebener Bitlänge n und gegebenem Speicherbedarf jede von der Rechenzeit her optimale Konfiguration äquivalent zu einer der folgenden Konfigurationen (mit $h_1 \geq h_2$, $b_1 \geq b_2$) ist:

$$h_1 \times v_1 \; [b_1] \; ,$$

$$h_1 \times v_1 \; [b_1] \; : \; (h_1-1) \times v_2 \; [b_1] \; ,$$

$$h_1 \times v_1 \; [b_1] \; : \; h_2 \times 1 \; [b_2] \; , \; \text{und}$$

$$h_1 \times v_1 \; [b_1] \; : \; (h_1-1) \times v_2 \; [b_1] \; : \; (h_2-1) \times 1 \; [b_2] \; . \qquad\qquad (28)$$

Dies gilt unabhängig vom Verhältnis des Zeitaufwandes für die Addition und die Verdopplung.

Um die gerade genannte Erkenntnis zu belegen, zeigen wir, daß es zu einer beliebigen Ausgangskonfiguration eine mindestens ebenso gute Konfiguration gibt, die einen Aufbau gemäß (28) hat. Dazu bemerken wir zunächst, daß die beiden Kombinationen $h \times (v+1) \; [b]$ und $h \times v \; [b] : h \times 1 \; [b]$ in Bezug auf Bitlänge (25), Zeitaufwand (26) und Speicheraufwand (27) äquivalent sind.

Infolgedessen können wir die Ausgangskonfiguration in eine Konfiguration von Typ

$$h_1 \times 1 \; [b_1] \; : \; h_2 \times 1 \; [b_2] \; : \; . \; . \; . \; : \; h_k \times 1 \; [b_k]$$

zerlegen, ohne die Bitlänge oder den Zeit- oder Speicheraufwand zu ändern.

Wir führen jetzt mit dieser Konfiguration einige Optimierungsschritte durch, und fassen bei dem Endergebnis die Komponenten mit gleichen Werten $h_i$ und $b_i$ wieder zusammen. Bei jedem Optimierungsschritt ist darauf zu achten, daß weder die Anzahl der Additionen (26) noch die der Verdoppelungen (26) größer wird. Ebenso darf die Bitlänge (25) nicht kleiner und der Speicheraufwand (27) nicht größer werden.

In einem ersten Optimierungsschritt sei $b_{max}$ = max $(b_1, ..., b_k)$. Solange es in der Konfiguration zwei verschiedene Komponenten $h_i \times 1 \; [b_i]$ , $h_j \times 1 \; [b_j]$ gibt mit $b_i < b_{max}$, $b_j < b_{max}$, $h_i \leq h_j$, ersetzen wir diese beiden Komponenten durch $h_i \times 1 \; [b_i-1]$ , $h_j \times 1 \; [b_j+1]$ , wobei im Fall $b_i = 1$ die Komponente $h_i \times 1 \; [1]$ gestrichen wird. Hierdurch erhöht sich die Bitlänge im Fall $h_i < h_j$, und bei einer Streichung verringert sich der Speicheraufwand, so daß dieser Schritt auf jeden Fall mit den Optimierungszielen kompatibel ist.

Wenn kein erster Optimierungsschritt mehr möglich ist, haben alle Komponenten mit höchstens einer Ausnahme $h_e \times 1 \; [b_e]$ den gleichen Wert $b_j = b_{max}$. Dabei sind die Werte $h_e$ und $b_e$ dieser einen Komponente (im Vergleich zu den entsprechenden Werten der anderen Komponenten) minimal.

Der zweite Optimierungsschritt wird ausgeführt, solange es in der Konfiguration zwei verschiedene Komponenten $h_i \times 1 \; [b_{max}]$, $h_j \times 1 \; [b_{max}]$ gibt mit $h_i < h_j$-1. In diesem Fall ersetzen wir diese beiden Komponenten durch $(h_i+1) \times 1 \; [b_{max}]$, $(h_j-1) \times 1 \; [b_{max}]$. Wegen $h_i+1 \leq h_j$-1 verringert sich hierdurch der Speicherbedarf (27). Bitlänge und Rechenzeit bleiben unverändert.

Wenn kein zweiter Optimierungsschritt mehr möglich ist, unterscheiden sich die Werte $h_i$ in den Komponenten

$h_i \times 1$ [$b_{max}$] um höchstens eins.

Somit können in der optimierten Konfiguration nur noch Komponenten der folgenden Typen auftreten:

$$h_e \times 1\ [b_e]\ ,\ h_{max} \times 1\ [b_{max}]\ ,\ (h_{max}-1) \times 1\ [b_{max}]\ ,$$

wobei $b_e$ und $h_e$ minimal sind, und höchstens eine Komponente vom Typ $h_e \times 1$ [$b_e$] auftritt. Faßt man jetzt gleichartige Komponenten wieder zusammen, so erhält man gerade die obige Aussage (28).

Für die praktisch relevanten Fälle der Bitlänge $n$ (mit $n \leq 256$ bei elliptischen Kurven und $n \leq 2048$ bei Algorithmen, die mit der multiplikativen Gruppe modulo einer natürlichen Zahl arbeiten) und bei dem auf Chipkarten üblicherweise vorhandenen Speicherplatz von weniger als 1 Mbyte lassen sich die optimalen Konfigurationen nach Aussage (28) mit wenig Rechenaufwand ermitteln.

Für ein Kryptosystem mit einer elliptischen Kurve, dessen Gruppenordnung eine Bitlänge von 160 hat, ergeben sich z.B. die in der folgenden Tabelle 1 angegebenen optimalen Konfigurationen.

Die in der obigen Beschreibung von Ausführungsbeispielen enthaltenen Einzelheiten sollen nicht als Einschränkungen des Schutzbereichs der Erfindung aufgefaßt werden, sondern vielmehr als Beispiele von bevorzugten Ausführungsformen. Viele andere Abwandlungen sind möglich und für den Fachmann offensichtlich.

Tabelle 1:

| Operationen | Gespeicherte Punkte | Konfiguration |
|---|---|---|
| 17 | 3072 | $10 \times 4$ [3]: $10 \times 2$ [2] |
| 18 | 2048 | $10 \times 4$ [4] |
| 19 | 1536 | $9 \times 6$ [3] |
| 20 | 1152 | $9 \times 4$ [4]: $8 \times 1$ [2] |
| 21 | 896 | $8 \times 6$ [3]: $8 \times 1$ [2] |
| 22 | 640 | $8 \times 5$ [4] |
| 23 | 512 | $8 \times 4$ [5] |
| 24 | 464 | $8 \times 3$ [5] : $7 \times 1$ [5] : $5 \times 1$ [1] |
| 25 | 384 | $7 \times 5$ [4] : $7 \times 1$ [3] |
| 26 | 320 | $7 \times 4$ [4]: $6 \times 2$ [4] |
| 27 | 256 | $7 \times 3$ [6] : $7 \times 1$ [5] |
| 28 | 224 | $7 \times 2$ [5] : $6 \times 3$ [5] |
| 29 | 192 | $7 \times 2$ [8] : $7 \times 1$ [7] |
| 30 | 160 | $7 \times 2$ [8] : $6 \times 1$ [8] |
| 32 | 128 | $6 \times 3$ [7]: $6 \times 1$ [6] |
| 33 | 112 | $6 \times 3$ [7]: $5 \times 1$ [7] |
| 34 | 96 | $6 \times 3$ [9] |
| 36 | 80 | $6 \times 2$ [10]: $5 \times 1$ [88] |
| 38 | 64 | $5 \times 4$ [8] |
| 41 | 48 | $5 \times 2$ [11]: $5 \times 1$ [10] |
| 44 | 40 | $5 \times 2$ [12] : $4 \times 1$ [10] |
| 46 | 32 | $5 \times 2$ [16] |
| 52 | 24 | $4 \times 2$ [14] : $4 \times 1$ [12] |
| 57 | 20 | $4 \times 2$ [17] : $3 \times 1$ [8] |

(fortgesetzt)

| Operationen | Gespeicherte Punkte | Konfiguration |
|---|---|---|
| 58 | 16 | 4×2 [20] |
| 67 | 12 | 4×1 [23] : 3×1 [23] |
| 78 | 8 | 4×1 [40] |
| 94 | 6 | 3×1 [32]: 2×1 [32] |
| 105 | 5 | 3×1 [53] : 1×1 [1] |
| 106 | 4 | 3×1 [54] |
| 158 | 2 | 2×1 [80] |

**Patentansprüche**

1. Verfahren für kryptographische Zwecke zur durch einen Prozessor ausgeführten Berechnung des $k$-fachen Vielfachen eines Elements g einer Gruppe G, mit den Schritten:

   - Darstellen von $k$ in einer balancierten Form mit n > 1 Koeffizienten $a_{n-1}$, $a_{n-2}$ ..., $a_1$, $a_0$ für einen vorgegebenen Parameter u > 1, wobei:

   -- $a_j \in \{-(2^u-1), -(2^u-3), ..., -1,1, ..., 2^u-3, 2^u-1\}$ für mindestens 90 % der Koeffizienten $a_j$, $0 \leq j < n$ gilt, und

   -- $k = \sum_{j=0}^{n-1} a_j \cdot 2^{u \cdot j}$ gilt, und

   - Durchführen eines ausspähungsgeschützten Multiplikationsverfahrens unter Verwendung der balancierten Form von $k$, um den Wert $k \cdot g$ als Ergebnis zu erhalten, wobei das Multiplikationsverfahren auf eine Mehrzahl vorberechneter und gespeicherter Hilfswerte zugreift, die Vielfache des Elements g darstellen, wobei
   - bei dem Multiplikationsverfahren schrittweise für alle Koeffizienten $a_j$, $0 \leq j < n$ mit $a_j \in \{-(2^u-1), -(2^u-3), ..., -1,1, ..., 2^u-3, 2^u-1\}$ je eine Multiplikation mit $2^u$ und eine Addition des Wertes $a_j \cdot g$ erfolgt, wobei der Wert $a_j \cdot g$ oder dessen Inverses durch einen Zugriff auf die Mehrzahl der vorberechneten und gespeicherten Hilfswerte ermittelt wird.

2. Verfahren nach Anspruch 1, **dadurch gekennzeichnet, dass** die Hilfswerte für $-2^u < m < 2^u$ jeweils höchstens eines der Vielfachen m·g und (-m)·g enthalten.

3. Verfahren nach Anspruch 1 oder Anspruch 2, **dadurch gekennzeichnet, dass** die Hilfswerte für alle ungeraden Zahlen $b$ mit $| b | < 2^u$ jeweils zumindest eines der Vielfachen, $b \cdot g$ und $(-b) \cdot g$ aufweisen.

4. Verfahren nach Anspruch 1 oder Anspruch 2, **dadurch gekennzeichnet, dass** die Hilfswerte für alle ungeraden Zahlen $b$ mit $|\cdot b | < 2^u$ jeweils genau eines der Vielfachen $b \cdot g$ und $(-b) \cdot g$ aufweisen.

5. Verfahren für kryptographische Zwecke zur durch einen Prozessor ausgeführten Berechnung des $k$-fachen Vielfachen eines Elements g einer Gruppe G, mit den Schritten:

   - Darstellen von $k$ in einer balancierten Form mit n > 1 Koeffizienten $a_{n-1}$, $a_{n-2}$, ..., $a_1$, $a_0$ für einen vorgegebenen Parameter u =1, wobei:

   -- $a_j \in \{-(2^u-1), -(2^u-3), ..., -1,1, ..., 2^u-3, 2^u-1\}$ für mindestens 90 % der Koeffizienten $a_j$, $0 \leq j < n$ gilt; und

   -- $k = \sum_{j=0}^{n-1} a_j \cdot 2^{u \cdot j}$ gilt, und

   - Durchführen eines ausspähungsgeschützten Multiplikationsverfahrens unter Verwendung der balancierten Form von $k$, um den Wert $k \cdot g$ als Ergebnis zu erhalten, wobei das Multiplikationsverfahren auf eine Mehrzahl vorberechneter und gespeicherter Hilfswerte zugreift, die Vielfache des Elements g darstellen, wobei
- die vorberechneten und gespeicherten Hilfswerte für alle Elemente Q einer mindestens einelementigen Menge $\underline{Q}$ = {$Q_1$, ..., $Q_t$} mit Q $\subset$ N für eine Indexmenge N = {0,1, ..., $n$-1} und eine Bitlänge $n$ und für alle Teilmengen T mit T $\subset$ Q zumindest je eines der Vielfachen $k$[T,Q]·g und -$k$[T,Q]·g enthalten, wobei $k$[T,Q] = ($\Sigma_{i \in T}$ $2^i$) - ($\Sigma_{i \in Q \setminus T}$ $2^i$) gilt, und wobei
- das Multiplikationsverfahren eine Berechnung gemäß der Formel

$$k \cdot g = \sum_{j=0}^{d-1} \left( 2^j \cdot \sum_{Q \in \underline{Q}, f(Q) > j} k[Q \cap (T_{k,n-j}), Q] \cdot g \right)$$

für die geeignet gewählte Menge $\underline{Q}$ aufweist, wobei die Funktion f definiert ist durch

$$f(Q) = f(x) \text{ für ein beliebiges } x \in Q, Q \in \underline{Q}$$

und

$$f(x) = \min \{ y \in N \mid x + y \in (Q' \setminus Q_i) \cup \{n\} \text{ mit } x_i \in Q_i \},$$

und wobei $d$ = max {$f$(x) | $x \in$ Q'} und $Q' = \bigcup_{i=1}^{t} Q_i$ gelten und $T_{k,n}$={$j$ | $j \in$ N, $a_j$=1} gilt, wobei ($a_{n-1}$, ..., $a_0$) die balancierte Binärform der Länge $n$ der Zahl $k$ ist und zumindest einer der Hilfswerte ungleich g und ungleich -g ist.

6. Verfahren nach Anspruch 5, **dadurch gekennzeichnet, dass** die balancierten Form eine balancierte Binärform ist, bei der der vorgegebene Parameter u den Wert 1 aufweist und die Koeffizientenanzahl n gleich der für die Berechnung verwendeten Bitlänge ist, so daß $a_j \in$ {-1,1} für mindestens 90 % der Koeffizienten $a_j$, $0 \le j < n$ gilt.

7. Verfahren nach Anspruch 5 oder Anspruch 6, **dadurch gekennzeichnet, dass** die Hilfswerte für -2 < m < 2 jeweils höchstens eines der Vielfachen m·g und (-m)·g enthalten.

8. Verfahren nach Anspruch 5 oder Anspruch 6, **dadurch gekennzeichnet, dass** die Hilfswerte für alle ungeraden Zahlen $b$ mit | $b$ |< $2^u$ jeweils zumindest eines der Vielfachen $b$·g und (-$b$)·g aufweisen.

9. Verfahren nach Anspruch 5 oder Anspruch 6, **dadurch gekennzeichnet, dass** die Hilfswerte für alle ungeraden Zahlen $b$ mit | $b$ |< $2^u$ jeweils genau eines der Vielfachen $b$·g und (-$b$)·g aufweisen.

10. Verfahren nach einem der Ansprüche 5 bis 9, **dadurch gekennzeichnet, dass** die Menge $\underline{Q}$ mindestens die Elemente einer Konfiguration $\underline{Q}_{h \times v[b]}$ mit $h \cdot b \cdot v = n$ aufweist, wobei gilt:

$$\underline{Q}_{h \times v[b]} = \{ i \cdot b + Z(b \cdot v, h) \mid i = 0, ..., v\text{-}1 \} \text{ mit } Z(k, i) = \{ k \cdot j \mid j = 0, ..., i\text{-}1 \}.$$

11. Verfahren nach einem der Ansprüche 5 bis 9, **dadurch gekennzeichnet, dass** die Menge Q die Elemente einer gemischten Konfiguration $\underline{Q}_{h1 \times v1[b1]} : h_{2 \times v2 [b2]} : .... ... : hk \times vk[bk]}$ mit $k$ Komponenten aufweist, wobei gilt:

$$n \;=\; \sum_{j=1}^{k} h_j \cdot b_j \cdot v_j$$

$$\underline{Q}_{h_1 \times v_1[b_1]\,:\,h_2 \times v_2\,[b_2]\,:\,\ldots\,\ldots\,:\,h_k \times v_k[b_k]} \;=$$

$$\bigcup_{j=1}^{k} \left( \{\, i \cdot b_j + Z(b_j \cdot v_j,\, h_j) \mid i = 0,\, \ldots,\, v-1 \,\} + \sum_{j=1}^{k-1} h_j \cdot b_j \cdot v_j \right)$$

$$\text{mit } Z(k,\, i) = \{\, k \cdot j \mid j = 0,\, \ldots,\, i-1 \,\}.$$

**12.** Verfahren nach einem der Ansprüche 1 bis 11, **dadurch gekennzeichnet, dass** die Gruppe G eine zyklische Gruppe mit einer ungeraden Gruppenordnung $e$ ist, und bei dem vorab der Wert $k$ durch Addition oder Subtraktion der Gruppenordnung $e$ in den Wertebereich $-e \leq k \leq e$ überführt wird.

**13.** Verfahren nach einem der Ansprüche 1 bis 12, **dadurch gekennzeichnet, dass** die Gruppe G die Eigenschaft hat, daß die Berechnung des Inversen eines Gruppenelements im Vergleich zur Addition zweier Gruppenelemente geringeren Aufwand erfordert.

**14.** Verfahren zur durch einen Prozessor ausgeführten Berechnung von Hilfswerten zur Verwendung in einem Verfahren zur Berechnung des k-fachen Vielfachens eines Elements g einer Gruppe G gemäß einem der Ansprüche 5 -11, mit den Schritten:

   - Bestimmen einer Bitlänge $n$,
   - Bestimmen einer mindestens einelementigen Menge $\underline{Q} = \{Q_1, \ldots, Q_t\}$ von Teilmengen der Menge $\{0, 1, \ldots, n-1\}$,
   - Berechnen und Speichern von jeweils mindestens einem der Vielfachen $k[T,Q] \cdot g$ und $-k[TQ] \cdot g$ für alle Mengen T und Q mit

   $T \subset Q \in \underline{Q}$ , wobei $k[T,Q] = (\Sigma_{i \in T}\, 2^i) - (\Sigma_{i \in Q \setminus T}\, 2^i)$ gilt und zumindest einer der Hilfswerte ungleich g und ungleich -g ist.

**15.** Verfahren nach Anspruch 14, **dadurch gekennzeichnet, dass** die Menge $\underline{Q}$ die Elemente einer der folgenden gemischten Konfigurationen mit $h_1 \geq h_2$ und $b_1 \geq b_2$ aufweist:

$$\underline{Q}_{h_1 \times v_1\,[b_1]\,:\,(h_1-1) \times v_2\,[b_1]}\,,$$

$$\underline{Q}_{h_1 \times v_1\,[b_1]\,:\,h_2 \times 1\,[b_2]}\,, \text{ und}$$

$$\underline{Q}_{h_1 \times v_1\,[b_1]\,:\,(h_1-1) \times v_2\,[b1]\,:\,(h_2-1) \times 1\,[b_2]}\,,$$

wobei für jede solche gemischte Konfiguration $\underline{Q}_{h_1 \times v_1[b_1]\,:\,h_2 \times v_2\,[b_2]:\ldots\,\ldots:\,h_k \times v_k[b_k]}$ mit $k$ Komponenten gilt:

$$n \;=\; \sum_{j=1}^{k} h_j \cdot b_j \cdot v_j$$

$$\underline{Q}_{h_1 \times v_1 [b_1] \,:\, h_2 \times v_2 [b_2] \,:\, \dots \dots \,:\, h_k \times v_k [b_k]} \;=$$

$$\bigcup_{j=1}^{k} (\, \{\, i \cdot b_j + Z(b_j \cdot v_j,\, h_j) \mid i = 0,\, \dots,\, v\text{-}1 \,\} + \sum_{j=1}^{k-1} h_j \cdot b_j \cdot v_j \,)$$

$$\text{mit } Z(k,\, i) = \{\, k \cdot j \mid j = 0,\, \dots,\, i\text{-}1 \}.$$

**16.** Vorrichtung, insbesondere Chipkarte, die dazu eingerichtet ist, ein Verfahren nach einem der Ansprüche 1 bis 13 und/ oder ein Verfahren nach einem der Ansprüche 14 und 15 auszuführen.

**Claims**

**1.** Method for cryptographic purposes for the calculation by a processor of the product of an element g of a group G and $k$, comprising the steps of:

- representing $k$ in a balanced form with n > 1 coefficients $a_{n-1}$, $a_{n-2}$, ..., $a_0$, for a pre-specified parameter u > 1, where:

- $a_j \in \{-(2^u-1), -(2^u-3), ..., -1, 1, ..., 2^u-3, 2^u-1\}$ holds for at least 90 % of the coefficients $a_j$, $0 \leq j < n$, and

$$- \; k = \sum_{j=0}^{n-1} a_j \cdot 2^{u \cdot j}, \quad \text{, and}$$

- carrying out a multiplication method that is protected against spying using the balanced form of $k$, so as to obtain the value $k \cdot$ g as a result, the multiplication method accessing a plurality of pre-calculated and stored auxiliary values which are multiples of the element g, wherein
- in the multiplication method, a multiplication by $2^u$ and an addition of the value $a_j \cdot$ g takes place for each of the coefficients $a_j$, $0 \leq j < n$ where $a_j \in \{-(2^u-1)$,
- $(2^u-3), ..., -1, 1, ..., 2^u-3, 2^u-1\}$, the value $a_j \cdot$ g or the inverse thereof being determined by accessing the plurality of pre-calculated and stored auxiliary values.

**2.** Method according to claim 1, **characterised in that** the auxiliary values for $-2^u < m < 2^u$ each contain at most one of the multiples m·g and (-m)·g.

**3.** Method according to either claim 1 or claim 2, **characterised in that** the auxiliary values for all odd numbers $b$ where $| b | < 2^u$ each comprise at least one of the multiples b·g and (-b)·g.

**4.** Method according to either claim 1 or claim 2, **characterised in that** the auxiliary values for all odd numbers $b$ where $| b | < 2^u$ each comprise exactly one of the multiples b·g and (-b)·g.

**5.** Method for cryptographic purposes for the calculation by a processor of the product of an element g of a group G and $k$, comprising the steps of:

- representing $k$ in a balanced form with n > 1 coefficients $a_{n-1}$, $a_{n-2}$, ..., $a_1$, $a_0$ for a pre-specified parameter u =1, where:

- $a_j \in \{-(2^u-1), -(2^u-3), ..., -1, 1, ..., 2^u-3, 2^u-1\}$ holds for at least 90 % of the coefficients $a_j$, $0 \leq j < n$, and

$$- \; k = \sum_{j=0}^{n-1} a_j \cdot 2^{u \cdot j}, \quad \text{and}$$

- carrying out a multiplication method that is protected against spying using the balanced form of $k$, so as to obtain the value $k{\cdot}g$ as a result, the multiplication method accessing a plurality of pre-calculated and stored auxiliary values which are multiples of the element g, wherein

- the pre-calculated and stored auxiliary values for all elements Q of a set $\underline{Q} = \{Q_1, ..., Q_t\}$ with at least one element, where $Q \subset N$ holds for an index set $N = \{0,1, ..., n\text{-}1\}$ and a bitlength n, and for all subsets T where $T \subset Q$, each contain at least one of the multiples $k[T,Q] \cdot g$ und $-k[T,Q]{\cdot}\, g$ , where $k[T,Q] = (\Sigma_{i\in T}\, 2^i)\text{-}(\Sigma_{i\in Q\backslash T}\, 2^i)$ , and wherein

- the multiplication method comprises a calculation according to the formula

$$k{\cdot}g \;=\; \Sigma\,{}^{d\text{-}1}_{j=0}\;(\,2^j \cdot \Sigma_{Q\in\mathbf{Q},\,f(Q)>j}\; k[Q\cap(T_{k,n}\text{-}j),\,Q] \cdot g\,)$$

for the appropriately selected set $\underline{Q}$, where the function f is defined by

$$f(Q) = f(x) \text{ for any } x\in Q , Q\in\mathbf{Q}$$

and

$$f(x) \;=\; \min\{\,y\in N \mid x+y \in (Q'\backslash Q_i)\cup\{n\} \text{ where } x_i \in Q_i\,\},$$

and where $d = \max\{f(x) \mid x\in Q'\}$ and $\; Q' \;=\; \bigcup{}^{t}_{i=1}\, Q_i\;$ hold and where $T_{k,n} = \{j \mid j\in N, a_j=1\}$, where $(a_{n\text{-}1}, ..., a_0)$ is the balanced binary form of the length $n$ of the number $k$ and at least one of the auxiliary values is not equal to g and not equal to -g.

6. Method according to claim 5, **characterised in that** the balanced form is a balanced binary form, in which the pre-specified parameter u takes the value 1 and the number of coefficients n is equal to the bitlength used for the calculation, in such a way that $a_j \in \{\text{-}1,1\}$ for at least 90 % of the coefficients $a_j$, $0 \le j < n$.

7. Method according to either claim 5 or claim 6, **characterised in that** the auxiliary values for -2 < m < 2 each contain at most one of the multiples m·g and (-m)·g.

8. Method according to either claim 5 or claim 6, **characterised in that** the auxiliary values for all odd numbers $b$ where $|\,b\,| < 2^u$ each comprise at least one of the multiples $b{\cdot}$g and (-$b$)·g.

9. Method according to either claim 5 or claim 6, **characterised in that** the auxiliary values for all odd numbers $b$ where $|\,b\,| < 2^u$ each comprise exactly one of the multiples $b{\cdot}$g and (-$b$)·g.

10. Method according to any one of claims 5 to 9, **characterised in that** the set $\underline{Q}$ comprises at least the elements of a configuration $\underline{Q}_{h\times v[b]}$ mit $h{\cdot}b{\cdot}v = n$, where:

$$\underline{Q}_{h\times v[b]} \;=\; \{\,i{\cdot}b + Z(b{\cdot}v, h) \mid i = 0, ..., v\text{-}1\,\} \text{ where } Z(k, i) = \{\,k{\cdot}j \mid j = 0, ..., i\text{-}1\}\,.$$

11. Method according to any one of claims 5 to 9, **characterised in that** the set $\underline{Q}$ comprises the elements of a mixed

configuration $\underline{Q}_{h_1 \times v_1[b_1]:\, h_2 \times v_2\,[b_2]:\ldots\ldots:\, h_k \times v_k[b_k]}$ with $k$ components, where:

$$n \;=\; \sum_{j=1}^{k} h_j \cdot b_j \cdot v_j$$

$$\underline{Q}_{h_1 \times v_1[b_1]\,:\,h_2 \times v_2\,[b_2]\,:\,\ldots\ldots\,:\,h_k \times v_k[b_k]} \;=$$

$$\bigcup_{j=1}^{k} \left( \{\, i \cdot b_j + Z(b_j \cdot v_j,\, h_j) \mid i = 0, \ldots, v\text{-}1 \,\} + \sum_{j=1}^{k-1} h_j \cdot b_j \cdot v_j \right)$$

$$\text{where } Z(k, i) = \{\, k \cdot j \mid j = 0, \ldots, i\text{-}1 \,\}.$$

**12.** Method according to any one of claims 1 to 11, **characterised in that** the group G is a cyclic group of odd group order e and in which the value $k$ is initially brought into the range $-e \leq k \leq e$ by adding or subtracting of the group order e.

**13.** Method according to any one of claims 1 to 12, **characterised in that** the group G has the property that the calculation of the inverse of a group element requires relatively little effort in comparison to the addition of two group elements.

**14.** Method for the calculation by a processor of auxiliary values for use in a method for the calculation of the product of an element g of a group G and $k$ according to any one of claims 5-11, comprising the steps of:

- determining a bitlength $n$,
- determining a set $\underline{Q} = \{Q_1, ..., Q_t\}$, with at least one element, from subsets of the set $\{0, 1, ..., n\text{-}1\}$,
- calculating and storing in each case at least one of the multiples $k[T,Q] \cdot g$ and $-k[T,Q] \cdot g$ for all of the sets T and Q with $T \subset Q \in \underline{Q}$, where $k[T,Q] = (\Sigma_{i \in T}\, 2^i) - (\Sigma_{i \in Q \setminus T}\, 2^i)$ and at least one of the auxiliary values is not equal to g and not equal to -g.

**15.** Method according to claim 14, **characterised in that** the set $\underline{Q}$ comprises the elements of one of the following mixed configurations where $h_1 \geq h_2$ and $b_1 \geq b_2$:

$$\underline{Q}_{h_1 \times v_1\,[b_1]\,:\,(h_1\text{-}1) \times v_2\,[b_1]}\ ,$$

$$\underline{Q}_{h_1 \times v_1\,[b_1]\,:\,h_2 \times 1\,[b_2]}\ ,\ \text{and}$$

$$\underline{Q}_{h_1 \times v_1\,[b_1]\,:\,(h_1\text{-}1) \times v_2\,[b1]\,:\,(h_2\text{-}1) \times 1\,[b_2]}\ ,$$

where for each mixed configuration $\underline{Q}_{h_1 \times v_1[b_1]:\, h_2 \times v_2\,[b_2]:\ldots\ldots:\, h_k \times v_k[b_k]}$ of this type with k components:

$$n \;=\; \sum_{j=1}^{k} h_j \cdot b_j \cdot v_j$$

$$\mathbf{Q}_{h_1 \times v_1 [b_1] \,:\, h_2 \times v_2\,[b_2]\,:\,\ldots\ldots\,:\,h_k \times v_k [b_k]} \;=\;$$

$$\bigcup_{j=1}^{k} (\,\{\, i \cdot b_j + Z(b_j \cdot v_j,\, h_j) \mid i = 0,\, \ldots,\, v\text{-}1 \,\} + \sum_{j=1}^{k-1} h_j \cdot b_j \cdot v_j \,)$$

$$\text{with}\; Z(k,\, i) = \{\, k \cdot j \mid j = 0,\, \ldots,\, i\text{-}1 \,\}\,.$$

16. Device, in particular a chip card, which is configured in such a way as to carry out a method according to any one of claims 1 to 13 and/ or a method according to either claim 14 or claim 15.

**Revendications**

1. Procédé à des fins cryptographiques pour le calcul effectué par un processeur du multiple k d'un élément g d'un groupe G, comprenant les étapes consistant à :

- représenter *k* sous une forme équilibrée avec n > 1 coefficients $a_{n-1}$, $a_{n-2}$, ..., $a_1$, $a_0$ pour un paramètre prédéfini u > 1, dans lequel :

-- $a_j \in \{-(2^u-1), -(2^u-3), \ldots, -1, 1, \ldots, 2^u-3, 2^u-1\}$ s'applique pour au moins 90 % des coefficients $a_j$, $0 \le j < n$, et

$$\text{--}\quad k = \sum_{j=0}^{n-1} a_j \cdot 2^{u \cdot j} \;\text{ s'applique, et}$$

- exécuter un procédé de multiplication protégé contre l'espionnage en utilisant la forme équilibrée de *k* pour obtenir la valeur $k \cdot$g comme résultat, dans lequel le procédé de multiplication accède à une pluralité de valeurs auxiliaires précalculées et mémorisées qui représentent le multiple de l'élément g, dans lequel
- dans le procédé de multiplication, pas à pas pour tous les coefficients $a_j$, $0 \le j < n$ avec $a_j \in \{-(2^u-1), -(2^u-3), \ldots, -1, 1, \ldots, 2^u-3, 2^u-1\}$, respectivement une multiplication avec $2^u$ et une addition de la valeur $a_j \cdot$g est effectuée, dans lequel la valeur $a_j \cdot$g ou son inverse est déterminée par l'accès à la pluralité de valeurs auxiliaires précalculées et mémorisées.

2. Procédé selon la revendication 1, **caractérisé en ce que** les valeurs auxiliaires pour $-2^u < m < 2^u$ contiennent respectivement au maximum l'un des multiples m·g et (-m)·g.

3. Procédé selon la revendication 1 ou 2, **caractérisé en ce que** les valeurs auxiliaires pour tous les nombres impairs *b* avec $| b | < 2^u$ présentent respectivement au moins l'un des multiples *b*·g et (-*b*)·g.

4. Procédé selon la revendication 1 ou 2, **caractérisé en ce que** les valeurs auxiliaires pour tous les nombres impairs *b* avec $| b | < 2^u$ présentent respectivement exactement l'un des multiples *b*·g et (-*b*)·g.

5. Procédé à des fins cryptographiques pour le calcul effectué par un processeur du multiple *k* d'un élément g d'un groupe G, comprenant les étapes consistant à :

- représenter k sous une forme équilibrée avec n > 1 coefficients $a_{n-1}$, $a_{n-2}$, ..., $a_1$, $a_0$ pour un paramètre prédéfini u = 1, dans lequel :

-- $a_j \in \{-(2^u-1), -(2^u-3), \ldots, -1, 1, \ldots, 2^u-3, 2^u-1\}$ s'applique pour au moins 90 % des coefficients $a_j$, $0 \le j < n$, et

$$\text{--}\quad k = \sum_{j=0}^{n-1} a_j \cdot 2^{u \cdot j} \;\text{ s'applique, et}$$

- exécuter un procédé de multiplication protégé contre l'espionnage en utilisant la forme équilibrée de *k* pour obtenir la valeur *k* · g comme résultat, dans lequel le procédé de multiplication accède à une pluralité de valeurs auxiliaires précalculées et mémorisées qui représentent le multiple de l'élément g, dans lequel
- les valeurs auxiliaires précalculées et mémorisées contiennent pour tous les éléments Q d'un ensemble à au moins un élément $\underline{Q} = \{Q_1, ..., Q_t\}$ avec $Q \subset N$ pour un ensemble des indices $N = \{0,1, ..., n\text{-}1\}$ et une longueur binaire *n* et pour tous les sous-ensembles T avec $T \subset Q$ au moins respectivement l'un des multiple $k[T,Q] \cdot g$ et $-k[T,Q] \cdot g$, dans lequel $k[T,Q] = (\Sigma_{i \in T} 2^i) - (\Sigma_{i \in Q \setminus T} 2^i)$ s'applique, et dans lequel
- le procédé de multiplication présente un calcul selon la formule

$$k \cdot g \ = \ \Sigma_{j=0}^{d-1} \ (\ 2^j \cdot \Sigma_{Q \in \mathbf{Q}, f(Q) > j} \ k[Q \cap (T_{k,n}\text{-}j), Q] \cdot g\ )$$

pour l'ensemble $\underline{Q}$ choisi de façon appropriée, dans lequel la fonction *f* est définie par

$$f(Q) = f(x) \text{ pour un } x \in Q, Q \in \mathbf{Q}$$

quelconque et

$$f(x) \ = \ \min \{\, y \in N \mid x + y \in (Q' \setminus Q_i) \cup \{n\} \text{ avec } x_i \in Q_i \,\},$$

et dans lequel $d = \max \{f(x) \mid x \in Q'\}$ et s'appliquent et $T_{k,n} = \{j \mid j \in N, a_j = 1\}$ s'applique, dans lequel $(a_{n-1}, ..., a_0)$ est la forme binaire équilibrée de la longueur *n* du nombre *k* et au moins l'une des valeurs auxiliaires est différente de g et différente de -g.

6. Procédé selon la revendication 5, **caractérisé en ce que** la forme équilibrée est une forme binaire équilibrée, dans laquelle le paramètre prédéfini u présente la valeur 1 et le nombre de coefficients n est égal à la longueur binaire utilisée pour le calcul, de sorte que $a_j \in \{-1,1\}$ s'applique pour au moins 90 % des coefficients $a_j$, $0 \le j < n$.

7. Procédé selon la revendication 5 ou 6, **caractérisé en ce que** les valeurs auxiliaires pour -2 < m < 2 contiennent respectivement au maximum l'un des multiples m·g et (-m)·g

8. Procédé selon la revendication 5 ou 6, **caractérisé en ce que** les valeurs auxiliaires pour tous les nombres impairs *b* avec $| b | < 2^u$ présentent respectivement au moins l'un des multiples *b*·g et (-*b*)·g.

9. Procédé selon la revendication 5 ou 6, **caractérisé en ce que** les valeurs auxiliaires pour tous les nombres impairs *b* avec $| b | < 2^u$ présentent respectivement exactement l'un des multiples *b*·g et (-*b*)·g.

10. Procédé selon l'une quelconque des revendications 5 à 9,
**caractérisé en ce que** l'ensemble $\underline{Q}$ présente au moins les éléments d'une configuration $\underline{Q}_{h \times v[b]}$ avec $h \cdot b \cdot v = n$, dans lequel :

$$\mathbf{Q}_{h \times v[b]} \ = \ \{\, i \cdot b + Z(b \cdot v, h) \mid i = 0, ..., v\text{-}1 \,\} \text{ avec } Z(k, i) = \{\, k \cdot j \mid j = 0, ..., i\text{-}1 \,\}$$

s'applique.

11. Procédé selon l'une quelconque des revendications 5 à 9,
**caractérisé en ce que** l'ensemble $\underline{Q}$ présente les éléments d'une configuration mixte

$\underline{Q}_{h1 \times v1[b1]: h2 \times v2\,[b2]:...\,...\,hk \times vk[bk]}$ avec $k$ composantes, dans lequel

$$n \;=\; \sum_{j=1}^{k} h_j \cdot b_j \cdot v_j$$

$$\mathbf{Q}_{h_1 \times v_1[b_1]\,:\,h_2 \times v_2\,[b_2]\,:\,...\,...\,:\,h_k \times v_k[b_k]} \;=\;$$

$$\bigcup_{j=1}^{k} \big(\, \{\, i \cdot b_j + Z(b_j \cdot v_j,\, h_j) \ \mid\ i = 0,\, ...,\, v\text{-}1 \,\} + \sum_{j=1}^{k-1} h_j \cdot b_j \cdot v_j \,\big)$$

$$\text{avec } Z(k,\, i) = \{\, k \cdot j \ \mid\ j = 0,\, ...,\, i\text{-}1 \,\}$$

s'applique.

**12.** Procédé selon l'une quelconque des revendications 1 à 11, **caractérisé en ce que** le groupe G est un groupe cyclique avec un ordre de groupe impaire, et dans lequel au préalable la valeur k est transférée par addition ou soustraction de l'ordre de groupe $e$ dans la gamme de valeurs $-e \leq k \leq e$.

**13.** Procédé selon l'une quelconque des revendications 1 à 12, **caractérisé en ce que** le groupe G présente la propriété que le calcul de l'inverse d'un élément de groupe demande moins d'effort en comparaison avec l'addition de deux éléments de groupe.

**14.** Procédé pour le calcul effectué par un processeur de valeurs auxiliaires pour une utilisation dans un procédé pour le calcul du multiple $k$ d'un élément g d'un groupe G selon l'une des revendications 5 à 11, comprenant les étapes consistant à :

- déterminer une longueur binaire $n$,
- déterminer au moins un ensemble à au moins un élément $\underline{Q}$ = {$Q_1$, ..., $Q_t$} composé de sous-ensembles de l'ensemble {0,1, ..., $n$-1},
- calculer et mémoriser respectivement au moins l'un des multiples $k$[T,Q]$\cdot$ g et -$k$[T,Q]$\cdot$ g pour tous les ensembles T et Q avec T $\subset$ Q $\in$ $\underline{Q}$, dans lequel $k$[T,Q] = $(\Sigma_{i \in T} 2^i$ -$(\Sigma_{i \in Q \setminus T} 2^i)$ s'applique et au moins l'une des valeurs auxiliaires est différente de g et différente de -g.

**15.** Procédé selon la revendication 14, **caractérisé en ce que** l'ensemble $\underline{Q}$ présente les éléments d'une des configurations mixtes suivantes avec $h_1 \geq h_2$ et $b_1 \geq b_2$ :

$$\mathbf{Q}_{h_1 \times v_1\,[b_1]\,:\,(h_1-1) \times v_2\,[b_1]}\,,$$

$$\mathbf{Q}_{h_1 \times v_1\,[b_1]\,:\,h_2 \times 1\,[b_2]}\,,\ \text{et}$$

$$\mathbf{Q}_{h_1 \times v_1\,[b_1]\,:\,(h_1-1) \times v_2\,[b1]\,:\,(h_2-1) \times 1\,[b_2]}\,,$$

dans lequel pour chaque configuration mixte de ce type $\underline{Q}h_1 \times v_1[b_1]\,:\,h_2 \times v_2[b_2]:\,...\,...\,:\,h_k \times v_k[b_k]$ avec $k$ composants :

$$n = \sum_{j=1}^{k} h_j \cdot b_j \cdot v_j$$

$$\mathbf{Q}_{h_1 \times v_1[b_1] : h_2 \times v_2[b_2] : \ldots \ldots : h_k \times v_k[b_k]} =$$

$$\bigcup_{j=1}^{k} (\{ i \cdot b_j + Z(b_j \cdot v_j, h_j) \mid i = 0, \ldots, v\text{-}1 \} + \sum_{j=1}^{k-1} h_j \cdot b_j \cdot v_j )$$

$$\text{avec } Z(k, i) = \{ k \cdot j \mid j = 0, \ldots, i\text{-}1\}$$

s'applique.

16. Dispositif, en particulier une carte à puce, qui est aménagé pour exécuter un procédé selon l'une quelconque des revendications 1 à 13 et/ ou un procédé selon l'une quelconque des revendications 14 et 15.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5999627 A

- WO 0005837 A1

**In der Beschreibung aufgeführte Nicht-Patentliteratur**

- **ALFRED J. MENEZES ; PAUL C. VAN OORSCHOT ; SCOTT A. VANSTONE.** Handbook of Applied Cryptography. CRC Press, 1997, 454

- The Art of Computer Programming. **D. E. KNUTH.** Seminumerical Algorithms. Addison Wesley, vol. 3